# EUROPEAN PATENT APPLICATION

(11) **EP 1 912 414 A1**
(43) Date of publication of application: **16.04.2008**
(21) Application number: 07020036.5
(22) Date of filing: 12.10.2007
(51) Int. Cl.: H04L 29/12

(54) **System and method for configuring IP address in communication system**

(30) Priority: 13.10.2006 KR 20060099812
(71) Applicant: Samsung Electronics Co., Ltd., Suwon-si, Gyeonggi-Do (KR)
(72) Inventor: Cheon, Jung-Hoon, Suwon-si Gyeonggi-do (KR); Min, Chan-Ho, Suwon-si Gyeonggi-do (KR)
(74) Representative: Boakes, Jason Carrington

(57) **Abstract**

Disclosed is a system and method for configuring an Internet Protocol) IP address in a communication system. The IP address configuration system includes a mobile station receiving a network advertisement message including network prefix information from a gateway, configuring the IP address by using the network prefix information, and transmitting a registration request message to the gateway after configuring the IP address; and the gateway creating the network advertisement message including the network prefix information, broadcasting the created network advertisement message, receiving the registration request message from the mobile station, creating a registration response message corresponding to the registration request message, and transmitting the created registration response message to the mobile station.

## Description

### TECHNICAL FIELD OF THE INVENTION

The present invention relates to a communication system, and more particularly to a system and method for configuring an Internet protocol (hereinafter referred to as "IP") address in a communication system.

### BACKGROUND OF THE INVENTION

In a next generation communication system, that is, a 4^{th} generation (hereinafter referred to as "4G") communication system, active research is being conducted to provide users with services having varying quality of service (hereinafter referred to as "QoS") levels at a transmission speed of about 100Mbps. A representative of the 4G communication system is the IEEE (Institute of Electrical and Electronics Engineers) 802.16 communication system.

In addition, a mobile Internet service, for example, the Wireless Broadband(WiBro) communication system, has a standard that is compatible with the IEEE 802.16 communication system standard, and provides high-speed data services by means of various types of portable subscriber stations (hereinafter referred to as "PSS") in an indoor or outdoor stationary environment or in a mobile environment of walking speed or mid/low speed (around 60km/h). Also, the WiBro communication system is currently implemented in such a manner as to be connected with the IPv6 (Internet Protocol version 6) that is one of the new next generation address systems.

The IPv6 was developed in order to improve the IPv4 (Internet Protocol version 4) in which some problems, such as insufficient address resources, a lack of mobility, a lack of security, and so forth, had arisen due to the explosive increase in use of the Internet since the 1990s. The IPv6 is well described in IETF (Internet Engineering Task Force) RFC (Request For Comments) 2460 standard document. Since the length of an IP address extends from the existing 32 bits to 128 bits in the IPv6, the IPv6 can resolve the problem with the deficiency of Internet address resources, and provide a way to process multimedia data in real time while enhancing security even more.

However, the IPv6 has a problem in that it performs duplicate address detection (hereinafter referred to as "DAD") for a mobile station (hereinafter referred to as "MS"), thereby causing time delay. In order to perform an IP connection procedure with a base station (hereinafter referred to as "BS"), the MS must perform an IP auto-configuration procedure. To this end, the MS configures an IP address of 128 bits in total by using 64-bit network prefix information and a 64-bit extended unique identifier address.

Upon configuring the IP address, the MS must perform the DAD to check if another MS in the same subnet uses the configured IP address. The MS cannot transmit/receive data to/from the BS until the DAD is completed.

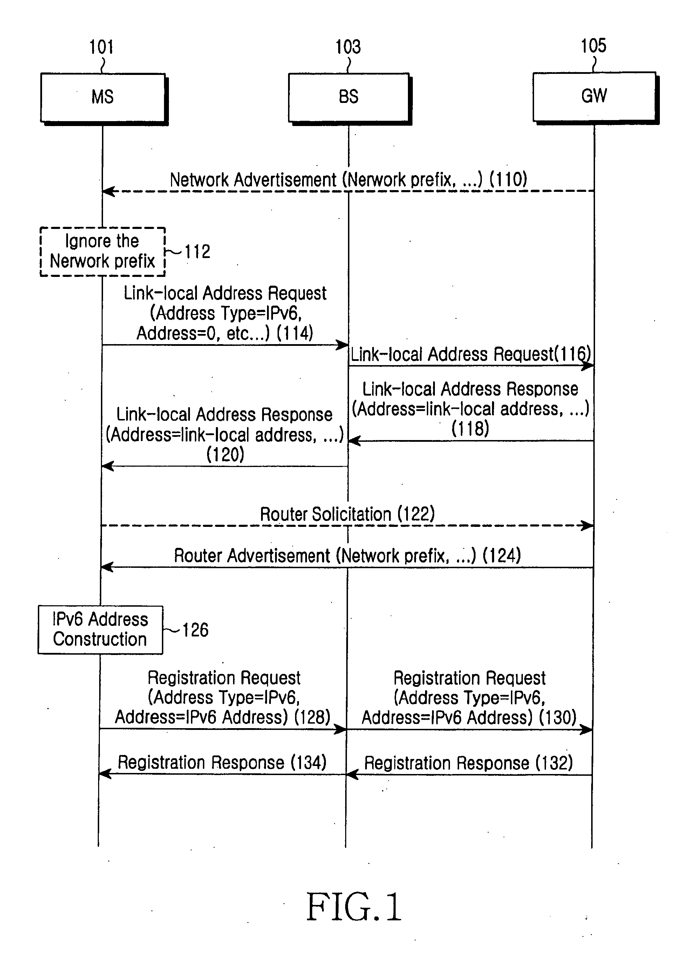

Reference will now be made to a common method of configuring an IP address in a communication system, with reference to FIGURE 1.

FIGURE 1 illustrates a common IP address configuration method in a communication system.

The communication system includes an MS 101, a BS 103, and a gateway (hereinafter referred to as "GW") 105.

In order to configure an IP address, the GW 105 extracts a network prefix through a link-local address available in a network where the MS 101 is currently located. Upon extracting the network prefix, the GW configures the IP address by using the extracted network prefix and the identifier of the MS 101.

More specially, in the existing 3GPP (3^{rd} Generation Partnership Project), an MS doesn't have its own unique identifier necessary for configuring a new IP address. Thus, a procedure of transmitting a message requesting for the unique identifier is required. Also, the unique identifier of the MS and link-local address information are received by a GGSN (Gateway GPRS Support Node) that operates as a GW in the 3GPP.

In the existing IPv6, since an MS must know a link-local address in order to be able to receive and decode a router advertisement message transmitted periodically by a GW, it ignores the network advertisement message in a state where it is not aware of the link-local address.

Referring to FIGURE 1, the GW 105 as a network node periodically broadcasts a network advertisement message including network-related information within the area of the GW, for example, a network prefix (step 110). The MS 101 ignores the network advertisement message (step 112), and transmits a link-local address request message to the BS 103 in order to send a router advertisement message requesting network prefix information necessary for IP address configuration to the GW 105 (step 114). Upon receiving the link-local address request message, the BS 103 transmits the received link-local address request message to the GW 105 (step 116). Upon receiving the link-local address request message, the GW 105 transmits a link-local address response message including link-local address information to the BS 103 (step 118). Upon receiving the link-local address response message, the BS 103 transmits the received link-local address response message to the MS 101 (step 120).

Upon receiving the link-local address response message, the MS 101 transmits a router solicitation message to the GW 105 by using the link-local address information included in the received link-local address response message (step 122). Upon receiving the router solicitation message, the GW 105 transmits the router advertisement message to the MS 101 (step 124).

Upon receiving the router advertisement message, the MS 101 acquires the network prefix information included in the router advertisement message. Also, the MS 101 configures an IP address through the acquired network prefix information (step 126). Upon configuring the IP address, the MS 101 transmits a registration request message for the IP address to the BS 103 (step 128). Upon receiving the registration request message, the BS 103 transmits the received registration request message to the GW 105 (step 130). Upon receiving the registration request message, the GW 105 transmits a registration response message for the IP address to the BS 103 (step 132). Upon receiving the registration response message, the BS 103 transmits the received registration response message to the MS 101 (step 134).

The IP address configuration method includes many steps of exchanging me ssages between the MS, the BS and the GW. With regard to this, since the network p refix information included in the router solicitation/advertisement message exchange d between the MS and the GW is also included in the network advertisement messag e broadcasted periodically by the GW, the message exchange for acquiring the netwo rk prefix information leads to unnecessary waste of resources, and causes time delay in IP address configuration.

### SUMMARY OF THE INVENTION

To address the above-discussed deficiencies of the prior art, it is a primary object for the present invention to solve at least the above-mentioned problems occurring in the prior art, and the present invention provides a system and method for configuring an IP address in a communication system while reducing waste of resources.

Further, the present invention provides a system and method for configuring an IP address in a communication system while shortening the time required for IP address configuration.

Further, the present invention provides a system and method for configuring an IP address in a communication system, in which the IP address is configured using network prefix information provided by a GW and an MAC address corresponding to the unique identifier of an MS to thereby reduce time delay caused by performing DAD.

In accordance with an aspect of the present invention, there is provided a method of configuring an IP address by an MS in a communication system, the method including the steps of: receiving a network advertisement message including network prefix information from a GW; configuring the IP address by using the network prefix information; and transmitting a registration request message to the GW after configuring the IP address.

In accordance with another aspect of the present invention, there is provided a method of configuring an IP address by a GW in a communication system, the method including the steps of: creating a network advertisement message including network prefix information, and broadcasting the created network advertisement message; receiving a registration request message from an MS; and creating a registration response message corresponding to the registration request message, and transmitting the created registration response message to the MS.

In accordance with yet another aspect of the present invention, there is provided a system for configuring an IP address in a communication system, the system including: an MS for receiving a network advertisement message including network prefix information from a GW, configuring the IP address by using the network prefix information, and transmitting a registration request message to the GW after configuring the IP address; and the GW for creating the network advertisement message including the network prefix information, broadcasting the created network advertisement message, receiving the registration request message from the MS, creating a registration response message corresponding to the registration request message, and transmitting the created registration response message to the MS.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGURE 1 is a view illustrating a common method of configuring an IP address in a communication system;
FIGURE 2 is a view illustrating a method of configuring an IP address in a communication system in accordance with an exemplary embodiment of the present invention;
FIGURE 3 is a flowchart illustrating an operation of an MS in accordance with an exemplary embodiment of the present invention; and
FIGURE 4 is a flowchart illustrating an operation of a GW in accordance with an exemplary embodiment of the present invention.

### DETAILED DESCRIPTION OF THE INVENTION

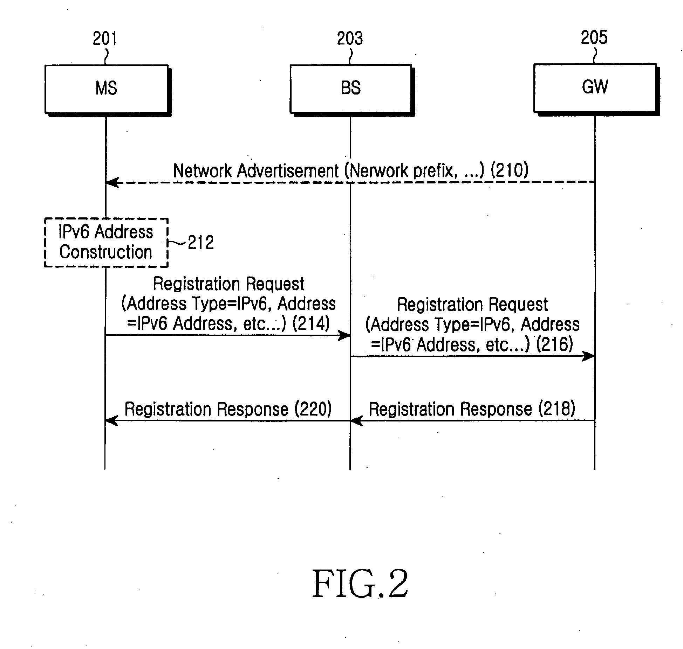

FIGURES 2 through 4, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged network communication system.

The present invention proposes a system and method for configuring an IP address in a communication system. In embodiments of the present invention to be described below, a method is proposed which reduces the number of times of message exchange by not using a link-local address. Thus, in order to configure an IP address by a mobile station (MS) that has recognized the necessity of configuring the IP address, it is necessary to apply a modified IP protocol between the MS and a gateway (GW).

The present invention may be applied when a handover occurs, as well as when an MS initially accesses a wireless network. In the present invention, it is assumed that a network node, that is, a GW, periodically transmits a network advertisement message, and an MS doesn't ignore the network advertisement message transmitted periodically by the GW. It is also assumed that if the MS is located in a network where the network advertisement message can be received, it performs modified operations different from those in existing IP protocols.

Reference will now be made in detail to an IP address configuration method according to the present invention, with reference to FIGURE 2.

FIGURE 2 illustrates a method of configuring an IP address in a communication system according to an exemplary embodiment of the present invention.

Referring to FIGURE 2, a GW 205 periodically broadcasts a network advertisement message (step 210). The network advertisement message is broadcasted to MSs existing in a network accessible to them. The network advertisement message includes network prefix information, network identifiers, new address configuration information, information on whether or not to try a handover, etc. An MS 201 identifies a change of a network prefix through the network advertisement message transmitted by the GW 205. As a result of this, the MS 201 recognizes that it must newly configure an IP address. Thus, the MS 201 configures a new IP address of 128 bits based on the network prefix included in the network advertisement message and the interface identifier of the MS 201 (step 212).

In the present invention, it is obvious that the MS 201 need not carry out DAD(Duplicate Address Detection), which must be performed in existing IP protocols, in configuring the IP address because the interface identifier of the MS 201 is information unique to the MS 201.

Upon configuring the new IP address, the MS 201 transmits a registration request message to a BS 203 in order to register the configured IP address with the GW 205 (step 214). As mentioned above, DAD for the IP address need not be carried out. Upon receiving the registration request message, the BS 203 transmits the received registration request message to the GW 205 (step 216). Upon receiving the registration request message, the GW 205 stores information related to the IP address in its database, based on information included in the registration request message, creates a registration response message corresponding to the registration request message, and then transmits the created registration response message to the BS 203 (step 218). Upon receiving the registration response message, the BS 203 transmits the received registration response message to the MS 201 (step 220).

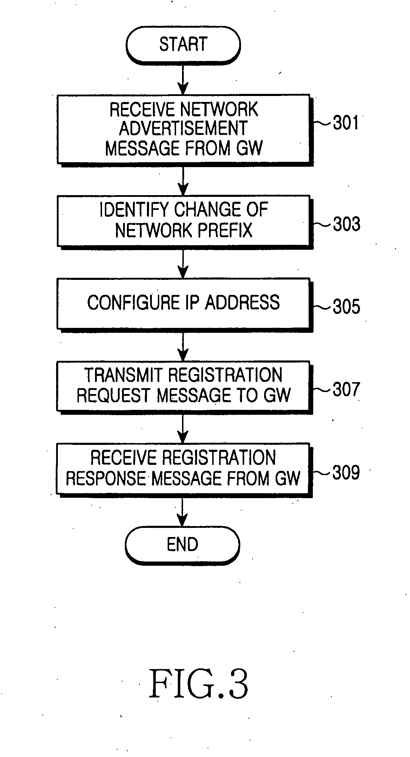

Reference will now be made to the operation of an MS according to the present invention, with reference to FIGURE 3.

FIGURE 3 illustrates the operation of a mobile station (MS) according to an exemplary embodiment of the present invention.

Referring to FIGURE 3, in step 301, the MS receives a network advertisement message from a GW. In step 303, the MS identifies a change of a network prefix through the received network advertisement message. In step 305, the MS configures a new IP address. In step 307, the MS transmits a registration request message for the configured IP address to the GW. In step 309, the MS receives a registration response message from the GW, and ends its operation.

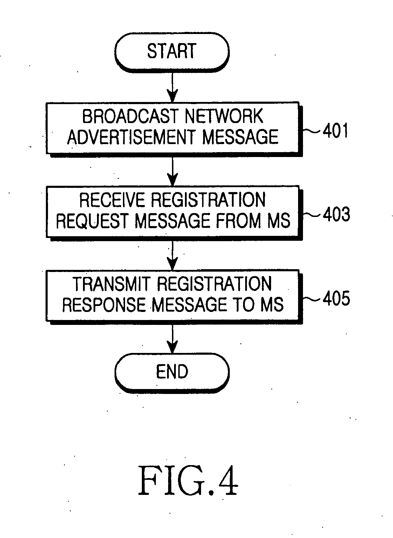

Next, reference will be made to the operation of a GW according to the present invention, with reference to FIGURE 4.

FIGURE 4 illustrates the operation of a gateway (GW) according to an exemplary embodiment of the present invention.

Referring to FIGURE 4, in step 401, the GW broadcasts a network advertisement message. In step 403, the GW receives a registration request message from an MS. In step 405, the GW transmits a registration response message corresponding to the registration request message, and ends its operation.

As described above, according to the inventive method and system for configuring an IP address in a communication system, an IP protocol applied between a GW and an MS is modified in such a manner as to omit router solicitation/advertisement message exchanges, so that unnecessary waste of radio resources can be reduced, and the time required for configuring the IP address can be shortened.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method of configuring an Internet Protocol (IP) address by a mobile station(MS) in a communication system, the method comprising the steps of:
receiving a network advertisement message including network prefix information from a gateway(GW);
configuring the IP address by using the network prefix information; and
transmitting a registration request message to the gateway after configuring the IP address.

2. The method as claimed in claim 1, wherein the IP address follows an IPv6 address system.

3. A method of configuring an Internet Protocol (IP) address by a gateway(GW) in a communication system, the method comprising the steps of:
creating a network advertisement message including network prefix information, and broadcasting the created network advertisement message;
receiving a registration request message from a mobile station(MS); and
creating a registration response message corresponding to the registration request message, and transmitting the created registration response message to the MS.

4. A system for configuring an Internet Protocol (IP) address in a communication system, the system comprising:
a mobile station(MS) for receiving a network advertisement message including network prefix information from a gateway(GW), configuring the IP address by using the network prefix information, and transmitting a registration request message to the GWafter configuring the IP address; and
the GW for creating the network advertisement message including the network prefix information, broadcasting the created network advertisement message, receiving the registration request message from the MS, creating a registration response message corresponding to the registration request message, and transmitting the created registration response message to the MS.

5. The system as claimed in claim 4, wherein the IP address follows an IPv6 address system.

6. The method as claimed in claim 3, wherein the IP address follows an IPv6 address system.

7. For use in a communication system, a mobile station operable to receive a network advertisement message including network prefix information from a gateway and to configure an Internet Protocol (IP) address using the network prefix information, wherein the mobile station is further operable to transmit a registration request message to the gateway after configuring the IP address.

8. The mobile station as claimed in claim 7, wherein the IP address follows an IPv6 address system.

9. For use in a communication system, a gateway for configuring an Internet Protocol (IP) address for use by a mobile station, wherein the gateway is operable to create a network advertisement message including network prefix information and to broadcast the created network advertisement message, and wherein the gateway is further operable to receive a registration request message from the mobile station, to create a registration response message corresponding to the registration request message, and to transmit the created registration response message to the mobile station.

10. The gateway as claimed in claim 9, wherein the IP address follows an IPv6 address system.
